# EUROPÄISCHE PATENTANMELDUNG

(11) **EP 1 591 682 A2**
(43) Veröffentlichungstag der Anmeldung: **02.11.2005**
(21) Anmeldenummer: 05007931.8
(22) Anmeldetag: 12.04.2005
(51) Int. Cl.: F16C 33/46

(54) **Käfig für ein Radiallager**

(30) Priorität: 27.04.2004 DE 102004020624
(71) Anmelder: INA-Schaeffler KG, 91074 Herzogenaurach (DE)
(72) Erfinder: Steinberger, Wolfgang, 91074 Herzogenaurach (DE); Winkler, Manfred, 91086 Aurachtal (DE); Dörrie, Swen, 91074 Herzogenaurach (DE)

(57) **Zusammenfassung**

Die Erfindung betrifft einen Käfig (1, 8), der nach dem Befüllen mit Wälzkörpern (6) einem Kalibriervorgang derart unterworfen ist, dass die Wälzkörper (6) durch Aufbringen einer Kraft in radialer Richtung nach außen oder nach innen verschoben werden, wobei an in Umfangsrichtung gegenüberliegenden Führungsflächen der Wälzkörpertaschen (2) durch die Wälzkörper (6) eine plastischen Materialverschiebung hervorgerufen wird, die dann beendet ist, wenn die Wälzkörper (6) ihre gewünschte Lage einnehmen.

## Beschreibung

### Anwendungsgebiet der Erfindung

Die Erfindung betrifft einen Käfig für ein Radiallager, bei dem in Taschen angeordnete zylindrischen Wälzkörper gegen ein Herausfallen in radial Richtung durch Halteelemente gesichert sind und Mittel vorhanden sind, welche die Wälzkörper gegenüber einer Außenlaufbahn oder gegenüber einen Innenlaufbahn in einer anliegenden Position halten.

### Hintergrund der Erfindung

Wälzkörperkränze, die in Lager verbaut werden, haben oft einen großen Wälzkörperdurchhang, d.h., sie fallen innerhalb der Tasche durch die Schwerkraft nach unten und geben so einen Spalt zwischen ihrer Abwälzfläche und der Außenlaufbahn frei. Dieser Durchhang bewirkt nun, dass eine in das Lager einzuführende Welle mit ihrer Stirnseite an die Stirnseiten einzelner Zylinderrollen anläuft, d.h., nicht ohne weiteres in das Lager eingeführt werden kann. Dadurch bedingt ist eine automatische Montage nur erschwert möglich.

Diesen Durchhang der Wälzkörper hat man nach der in der US 3,051,534 beschriebenen Lösung bisher dadurch zu vermeiden gesucht, dass oberhalb bzw. unterhalb des eigentlichen Käfigs ein zweiter Ring angeordnet ist, der umbiegbare Halteabschnitte aufweist, die die im Käfig geführten Wälzkörper gegen die Innenlaufbahn bzw. gegen die Außenlaufbahn pressen. Diese Art der Halterung der Wälzkörper ist jedoch sehr aufwendig und damit teuer, da neben dem eigentlichen Lagerkäfig ein weiteres Halteteil gefertigt und in das Lager eingebaut werden muß. Außerdem besteht die Gefahr, dass bei einer solchen Lösung durch die enge Führung zwischen Wälzkörper und Käfig bzw. zwischen Wälzkörper und zusätzlichem Ring das Lager in seiner Funktion beeinträchtigt ist.

Aus der DE 196 81 377 C1 ist eine andere Möglichkeit zum Vermeiden des Durchhanges der Wälzkörper bekannt geworden. Dies erfolgt derart, dass an der Wälzkörperinnen- bzw. der Wälzkörperaußenhalterung in den Taschen des Lagerkäfigs Mittel angeordnet sind, die nach einigen Lagerumdrehungen verschleißen, so dass sich ein normales Betriebsspiel zwischen den Wälzkörpern und den Käfigtaschen einstellen kann. Nachteilig dürfte in diesen Fall jedoch eine hohe Lagerreibung zur Beginn der Nutzungsdauer des Lager sein.

In diesem Zusammenhang ist auch von Bedeutung, dass bei bestimmten Lageranwendungen ein fertigungstechnisch bedingtes Spiel der Wälzkörper in den Taschen zu groß ist. In diesem Fall müssten die Toleranzen durch eine hundertprozentige Kontrolle aller Nadelkränze eingeschränkt werden, d.h., es dürften nur die Nadelkränze weiterverwendet werden, die den geforderten engen Toleranzbereich aufweisen. Bei der dieser Art der Auslese müssten vielen Nadelkränze verworfen werden, was aber wirtschaftlich unsinnig ist. Dieses Problem eines zu großen Toleranzspiels spielt bei schnelllaufenden Maschinenelementen, beispielsweise bei der Lagerung von Losrädern in Schaltgetrieben, eine große Rolle. Es kann dazu führen, dass Lager zu Eigenschwingungen angeregt werden, die Getriebegeräusche verursachen und im Extremfall auch zu Lagerausfällen führen können.

### Zusammenfassung der Erfindung

Aufgabe der Erfindung ist es daher, eine optimale Einstellung von Wälzkörpern und Lagerkäfig zueinander zu bewerkstelligen.

Erfindungsgemäß wird diese Aufgabe nach dem kennzeichnenden Teil von Anspruch 1 in Verbindung mit dessen Oberbegriff dadurch gelöst, dass der Käfig nach dem Befüllen mit Wälzkörper einen Kalibriervorgang derart unterworfen ist, dass die Wälzkörper durch Aufbringen einer Kraft in radialer Richtung nach außen oder nach innen verschoben werden, wobei an in Umfangsrichtung gegenüberliegenden Führungsflächen der Wälzkörpertaschen durch die Wälzkörper eine plastische Materialverschiebung hervorgerufen wird, die dann beendet ist, wenn die Wälzkörper ihre gewünschte Lage einnehmen.

Durch diesen zusätzlichen Kalibriervorgang des Nadelkranzes vor seinem Einbau wird die ideale Lage der zylindrischen Wälzkörper im jeweiligen Käfig eingestellt. Durch das Kalibrieren wird ein eingeengtes Spiel zwischen Wälzkörpern und Käfig erreicht, dass sich wiederum günstig auf die zu lagernden Teile auswirkt, da diese nicht zu Schwingungen angeregt werden. Da jeder Käfig fertigungsbedingt einen etwas unterschiedlich großen Durchmesser aufweist, ist auch die zugehörige Lage der zylindrischen Wälzkörper im jeweiligen Käfig unterschiedlich. Durch das Kalibrieren, d.h., durch ein radiales Verschieben der Wälzkörper im Käfig nach innen oder nach außen, wird deren ideale Lage im Käfig in Abhängigkeit von dessen jeweiligen Durchmesser eingestellt.

Vorteilhafte Ausführungsvarianten der Erfindung sind in den Unteransprüchen 2 - 5 beschrieben.

So ist nach Anspruch 2 vorgesehen, dass die Führungsflächen als in Umfangsrichtung hervorstehende keilförmige Rampen ausgebildet sind, wobei auf jeder Taschenseite je zwei in axialer Richtung voneinander beabstandete, in Umfangsrichtung gegenüber liegende Rampen angeordnet sind.

Nach einem weiteren Merkmal der Erfindung gemäß Anspruch 3 sollen die Rampen einen in radialer Richtung nach innen ansteigenden Verlauf nehmen und die Halteelemente am radial außen liegenden Ende der Tasche angeordnet sein. Diese Variante kommt dann zum Tragen, wenn die Befüllung des Wälzlagerkäfigs mit den Wälzkörper in radialer Richtung von außen nach innen erfolgt.

Nach einem anderen zusätzlichen Merkmal gemäß Anspruch 4 ist vorgesehen, dass die Rampen einen in radialer Richtung nach außen ansteigenden Verlauf nehmen und die Halteelemente am radial innen liegenden Ende der Taschen angeordnet sind. Diese Ausführungsvariante kommt dann zum Tragen, wenn die Befüllung des Wälzlagerkäfigs in radialer Richtung von innen nach außen erfolgt.

Schließlich geht aus einem letzten Merkmal der Erfindung gemäß Anspruch 6 hervor, dass die Wälzkörper als Nadeln ausgebildet sind und der Wälzkörperkranz zur Lagerung eines Losrades in einem Zahnräderwechselgetriebe verwendet ist.

Bei Zahnräderwechselgetrieben mit wenigstens einem über Wälzlager auf einer Getriebewelle gelagerten Zahnrad, das über ein Kuppelelement mit der Getriebewelle kuppelbar ist, wobei radial zwischen der der Getriebewelle zugeordneten inneren Laufbahn und einer einer Nabe des Zahnrades zugeordneten äußeren Laufbahn in einem Käfig angeordnete zylindrische Wälzkörper angeordnet sind, spielt eine einwandfreie Lagerung des Zahnrades eine entscheidende Rolle. Im unbelasteten, d. h., nicht geschalteten Zustand läuft das Lager unter Umständen nicht kinematisch um, d. h. es ist mit Schlupf belastet. So kann es im Extremfall vorkommen, dass die Getriebewelle stillsteht und das Losrad mehrere hundert bis mehrere tausend Umdrehungen pro Minute erreicht. Kommt der Käfig in Rotationsbewegung, so legen sich die Wälzkörper aufgrund der Zentrifugalkraft an die Außenlaufbahn an, so dass der Käfig annähernd die Drehzahl des Losrades erreichen kann, während die Wälzkörper aufgrund des Betriebsspiels den Kontakt zur Laufbahn der Getriebewelle verlieren. Dadurch findet eine Gleitbewegung der Wälzkörper auf der Laufbahn der Getriebewelle statt, die zu einem erhöhten Verschleiß bzw. zu Anschmierungen führen kann, wenn die Wälzkörper plötzlich belastet werden. Es liegt auf der Hand, dass speziell in diesem Fall der Abstimmung zwischen Wälzkörper und Käfig gemäß der Erfindung eine besondere Bedeutung zukommt.

Die Erfindung wird an nachstehenden Ausführungsbeispielen näher erläutert.

### Kurze Beschreibung der Zeichnungen

Es zeigen:
- Figuren 1 und 4: eine perspektivische Darstellung einer erfindungs-gemäß gestalteten Tasche eines Radialkäfigs,
- Figuren 2 und 5: einen Querschnitt im Bereich der Rampen 3-3 gemäß den Figuren 1 und 4 vor dem Kalibrieren und
- Figuren 3 und 6: einen Querschnitt im Bereich der Rampen 3-3 gemäß den Figuren 1 und 4 nach dem Kalibrieren.

### Ausführliche Beschreibung der Zeichnungen

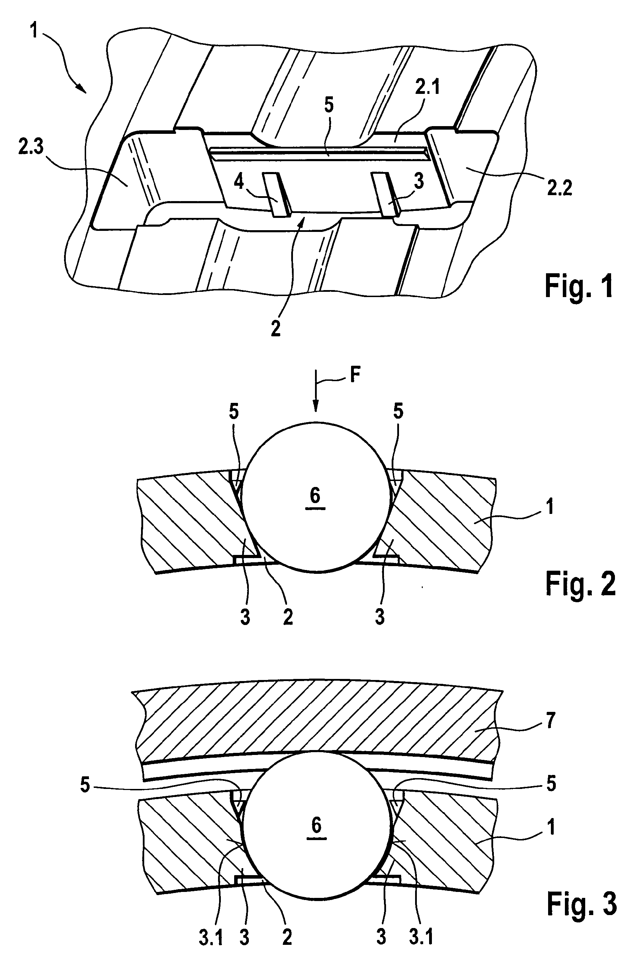

Wie aus den Figuren 1 bis 3 ersichtlich, weist der erfindungsgemäße Käfig 1 gleichmäßig in Umfangsrichtung von einander beabstandete Taschen 2 auf, die aus einem Mittelabschnitt 2.1 und den beiden Seitenabschnitten 2.2, 2,3 bestehen, wobei allerdings nur eine Tasche 2 zeichnerisch dargestellt ist. Der Mittelabschnitt 2.1 ist in Umfangsrichtung hervorstehend, d.h., sein Abstand in Umfangsrichtung von Taschenrand zu Taschenrand ist geringer als bei den beiden Seitenabschnitten 2.2, 2.3. Auf dem in Umfangsrichtung hervorspringenden Mittelabschnitt 2.1 sind beidseitig Rampen 3, 4 angeordnet, die in axialer Richtung voneinander beabstandet sind und sich in Umfangsrichtung genau gegenüber liegen. Dies bedeutet, zum jeweiligen Mittelabschnitt 2.1 jeder Tasche 2 gehören die in axialer Richtung voneinander beabstandeten Ramen 3, 4, die sich in Umfangsrichtung paarweise gegenüberliegen, wobei die Rampe 3 der zugehörigen anderen Rampe 3 gegenüber liegt. Das gleiche trifft für die Rampe 4 zu.

Wie den Figuren weiter entnehmbar, steigen die keilförmigen Rampen 3, 4 in radialer Richtung von außen nach innen an, d.h., ihr Abstand zueinander in Umfangsrichtung verringert sich. Zur Tasche 2 gehört weiter das ebenfalls beidseitig angeordnetes Halteelement 5, das dreieckförmig ausgebildet ist und im radialen Abstand oberhalb von den beiden Rampen 3, 4 angeordnet ist. Dieses Halteelement 5 erstreckt sich entlang der gesamten axialen Ausdehnung des Mittelabschnittes 2.1. Wie den Figuren auch entnehmbar, erfolgt das Befüllen der Taschen 2 des Käfigs 1 mit zylindrischen Wälzkörpern 6 in radialer Richtung von außen nach innen. Dabei muß zunächst der Wälzkörper 6 durch die beiden Halteelemente 5 hindurch bewegt werden, die ein Entweichen des Wälzkörpers 6 aus der Tasche 2 in radialer Richtung nach außen verhindern sollen. Wie aus Figur 2 erkennbar, ist nach dem Einfüllen, aber vor dem Kalibrieren der Wälzkörper 6 in der Tasche 2 so positioniert, dass er mit seiner Mantelfläche an den gegenüberliegenden glatten Flächen der Rampen 3, 4 anliegt, wobei seine Endlage gegeben ist. Er kann sich in radialer Richtung nicht mehr weiter nach unten bewegen. Da, wie bereits vorstehend beschrieben, unterschiedliche Käfigdurchmesser unterschiedliche Nadelpositionen bewirken, die wiederum Einfluß auf das Laufverhalten des Nadelkranzes haben, wird durch den Kalibriervorgang eine optimale Position der zylindrischen Wälzkörper 6 im Käfig 1 eingestellt. Dies erfolgt derart, dass durch Aufbringen einer radialen Kraft F auf den zylindrischen Wälzkörper 6 dieser in der Tasche 2 des Käfigs 1 in radialer Richtung nach innen bewegt wird. Dies hat zur Folge, dass die ebenen gegenüberliegenden Flächen der Rampen 3, 4 mit einer Eindellung 3.1, 4.1 versehen werden, wie aus Figur 3 erkennbar. In Figur 3 ist letztendlich die ideale Lage der zylindrischen Wälzkörper 6 im Käfig 1 dargestellt, wobei die Größe der radialen Verschiebung der zylindrischen Wälzkörper 6 innerhalb des Käfigs 1 vom jeweiligen Käfigdurchmesser abhängt.

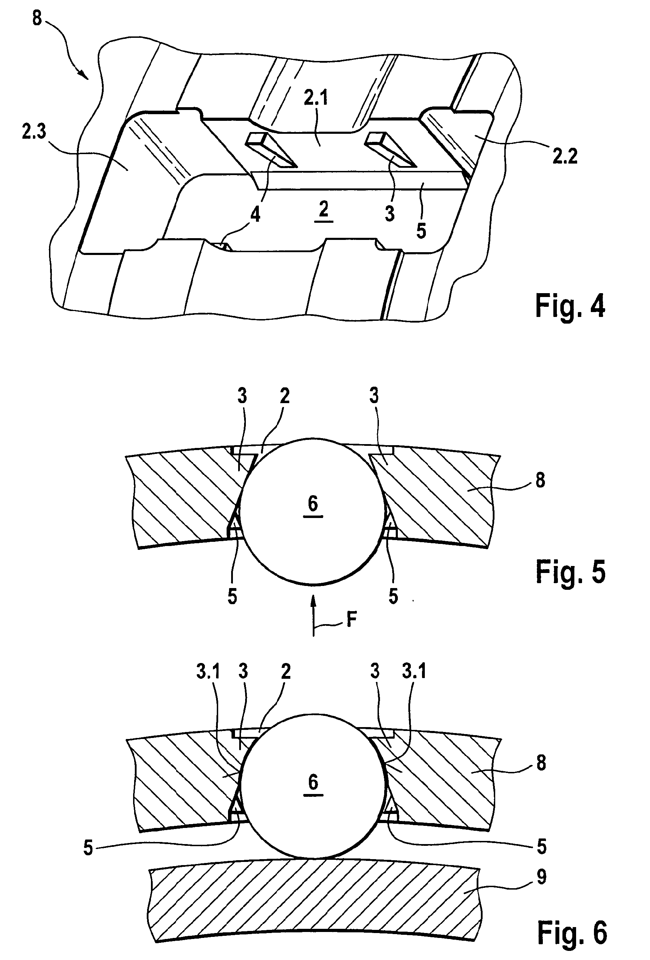

Der in den Figuren 4, 5 und 6 gezeigte Käfig 8 unterscheidet sich vom Käfig 1 lediglich dadurch, dass die Rampen 3, 4 einen in radialer Richtung von innen nach außen ansteigenden Verlauf nehmen, wobei das Halteelement 5 demzufolge am radialen inneren Ende der Tasche 2 angeordnet sein muß. Dieser Käfig 8 wird mit Wälzkörpern 6 in radialer Richtung von innen nach außen befüllt und ebenso kalibriert wie Käfig 1, wobei die Kraft F aber umgekehrt in radialer Richtung von innen nach außen wirkt.

### Bezugszahlenliste

- 1: Käfig
- 2: Tasche
- 2.1: Mittelabschnitt
- 2.2: Seitenabschnitt
- 2.3: Seitenabschnitt
- 3: Rampe
- 3.1: Eindellung
- 4: Rampe
- 4.1: Eindellung
- 5: Halteelement
- 6: Wälzkörper
- 7: Außenring
- 8: Käfig
- 9: Innenring
- F: Kraft

## Patentansprüche

1. Käfig (1,8) für ein Radiallager, bei dem in Taschen (2) angeordnete zylindrische Wälzkörper (6) gegen ein Herausfallen in radialer Richtung durch Halteelemente (5) gesichert sind und Mittel vorhanden sind, welche die Wälzkörper (6) gegenüber einer Außenlaufbahn oder gegenüber einer Innenlaufbahn in einer anliegenden Position halten, **dadurch gekennzeichnet, dass** der Käfig (1,8) nach dem Befüllen mit Wälzkörpern (6) einem Kalibriervorgang derart unterworfen ist, dass die Wälzkörper (6) durch Aufbringen einer Kraft in radialer Richtung nach außen oder nach innen verschoben werden, wobei an in Umfangsrichtung gegenüberliegenden Führungsflächen der Wälzkörpertaschen (2) durch die Wälzkörper (6) eine plastische Materialverschiebung hervorgerufen wird, die dann beendet ist, wenn die Wälzkörper (6) ihre gewünschte Lage einnehmen.

2. Käfig (1,8) nach Anspruch 1, **dadurch gekennzeichnet, dass** die Führungsflächen als in Umfangsrichtung hervorstehende keilförmige Rampen (3,4,)ausgebildet sind, wobei auf jeder Taschenseite je zwei in axialer Richtung voneinander beabstandete (3,4), in Umfangsrichtung gegenüberliegende Rampen (3,3,4,4) angeordnet sind.

3. Käfig (1) nach Anspruch 1, **dadurch gekennzeichnet, dass** die Rampen (3,4) einen in radialer Richtung nach innen ansteigenden Verlauf nehmen und die Halteelemente (5) am radial außen liegenden Ende der Tasche (2) angeordnet sind.

4. Käfig (8) nach Anspruch 1, **dadurch gekennzeichnet, dass** die Rampen (3,4) einen in radialer Richtung nach außen ansteigenden Verlauf nehmen und die Halteelemente (5) am radial innen liegenden Ende der Tasche (2) angeordnet sind.

5. Käfig (1,8) nach Anspruch 1, **dadurch gekennzeichnet, dass** die Wälzkörper (6) als Nadeln ausgebildet sind der Wälzkörperkranz zur Lagerung eines Losrades in einem Zahnräderwechselgetriebe verwendet ist.
